Europäisches Patentamt

European Patent Office

Office européen des brevets

(19)

(11) Veröffentlichungsnummer : **0 461 070 A1**

# (12) EUROPÄISCHE PATENTANMELDUNG

(21) Anmeldenummer : **91810393.8**

(22) Anmeldetag : **24.05.91**

(51) Int. Cl.⁵ : **B65G 47/29**

(30) Priorität : **06.06.90 CH 1897/90**

(43) Veröffentlichungstag der Anmeldung :
**11.12.91 Patentblatt 91/50**

(84) Benannte Vertragsstaaten :
**BE CH DE ES FR GB IT LI LU NL**

(71) Anmelder : **ROTZINGER AG**
**Ueberlandstrasse 310**
**CH-4303 Kaiseraugst (CH)**

(72) Erfinder : **Rotzinger, Hans**
**Ziegelhofweg 7**
**CH-4303 Kaiseraugst (CH)**

(74) Vertreter : **Eder, Carl E. et al**
**Patentanwaltsbüro EDER AG**
**Lindenhofstrasse 40**
**CH-4052 Basel (CH)**

(54) **Vorrichtung um in unregelmässiger Folge eintreffende Gegenstände abzulegen.**

(57)  Die Vorrichtung dient insbesondere dazu, irgendwelche Gegenstände, wie z.B. Folienbeutel mit flüssiger Füllung, absolut staudrucklos so anzuordnen, dass sie eine Reihe mit konstantem Abstand bilden, damit sie nachher gemeinsam, das heisst, als vollständige, regelmässige Reihe, behandelt oder transportiert werden können. Der wesentliche Teil der erfindungsgemässen Vorrichtung wird durch ein teleskopartig verlängerbares Förderband (2) gebildet, dessen über einer Ablagefläche (18) liegende Abwurfkante (9) verschiebbar ist. Eine an dieser Kante angebrachte, durch die ankommenden Gegenstände (21) schaltbare Lichtschranke bewirkt ein Anhalten des Förderbandes (2) sowie ein Verschieben der Abwurfkante (9) in der Richtung entgegen der Förderbandlaufrichtung um eine Strecke, die der Länge eines Gegenstandes (21) plus der konstanten Distanz zum nächsten Gegenstand entspricht. Wenn die Abwurfkante (9) nach der stufenweisen Verkürzung des Förderbandes das zweite Ende der Ablagefläche erreicht hat, wird ein Endschalter (24) betätigt, der die Abwurfkante (9) mit der Förderbandgeschwindigkeit zum ersten Ende der Ablagefläche (18) zurückverschiebt.

EP 0 461 070 A1

Fig.2

Die erfindungsgemässe Vorrichtung dient dazu, um in unregelmässiger Folge eintreffende gleichartige Gegenstände, wie z.B. Folienbeutel mit flüssiger Füllung, absolut staudrucklos so anzuordnen, dass sie eine Reihe mit konstantem Abstand bilden, damit sie nachher gemeinsam, d.h. als geschlossene Reihe, behandelt oder transportiert werden können. Die diesem Zweck dienende erfindungsgemässe Vorrichtung ist nun durch die kennzeichnenden Merkmale des Anspruches 1 gekennzeichnet.

Nachfolgend wird anhand einer Zeichnung ein Ausführungsbeispiel der Erfindung beschrieben. In der Zeichnung zeigt

die Fig. 1 eine Seitenansicht der Vorrichtung, wobei das Förderband seine grösstmögliche Länge besitzt,

die Fig. 2 die gleiche Seitenansicht, wobei das Förderband jedoch seine kürzeste Länge aufweist, und

die Fig. 3 eine Ansicht der Einrichtung eines Teils der Vorrichtung, gesehen in der Richtung des Pfeiles III in der Fig. 2.

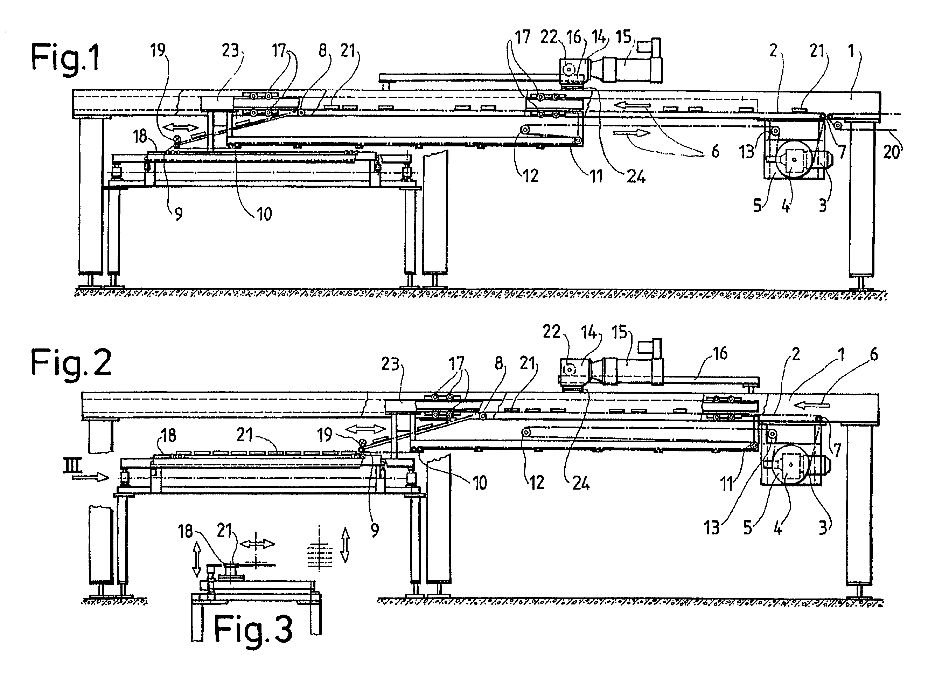

In einem Gestell 1 der Vorrichtung ist als ein wesentliches Element das Förderband 2 angeordnet. Es wird durch den mit einem Untersetzungsgetriebe 4 versehenen Motor 3 so über die Antriebstrommel 5 angetrieben, dass es in der Richtung der Pfeile 6 umläuft. Dieses Band 2 ist von der Antriebstrommel 5 über eine Umlenkwalze 7 und eine weitere Umlenkwalze 8 zu der die Abwurfkante bildenden Umlenkwalze 9 und von dort über eine Spannvorrichtung 10 sowie drei weiteren Umlenkwalzen 11, 12 und 13 der Antriebstrommel 5 zugeführt. Selbstverständlich kann das Band an mehreren Stellen durch nicht gezeichnete Stützwalzen oder ähnliche Hilfsmittel abgestützt sein. Die Antriebstrommel 5 sowie die Umlenkwalzen 7, 12 und 13 sind im Gestell 1 ortsfest gelagert, während die Umlenkwalzen 8, 9 und 11 sowie die Spannvorrichtung 10 in einem durch Rollen 17 geführten Schlitten 23 gelagert sind, der sich durch ein Zahnrad 22, das über ein Getriebe 14 von einem Motor 15 angetrieben wird und mit einer Zahnstange 16 kämmt, aus der in der Fig. 1 dargestellten Lage in die in der Fig. 2 dargestellte Lage und zurück verschieben lässt. Wie man ohne weiteres sieht, dient dieser Schlitten dazu, die wirksame Länge des am einen Ende ortsfest angeordneten Förderbandes teleskopartig zu verlängern und zu verkürzen. Am freien, also beweglichen Ende dieser Förderbandanlage, also bei der die Abwurfkante bildenden Umlenkwalze 9, die nur knapp über der Ablegefläche 18 angeordnet ist, ist eine Lichtschranke 19 angebracht, während sich beim Getriebe 14 ein mit den Enden der Zahnstange 16 zusammenwirkendes Endschalterpaar 24 befindet. Ein mit 20 bezeichnetes zweites Förderband dient dazu, die auf der Ablegefläche 18 regelmässig anzuordnenden gleichartigen Gegenstände, also z.B. die Folienbeutel 21, dem diese Aufgabe durchführenden Förderband 2 zuzuführen.

Die vorstehend beschriebene Vorrichtung arbeitete nun wie folgt:

Vom als Zuführungsband dienenden Förderband 20 gelangen die einzelnen Folienbeutel 21 in unregelmässigen Abständen auf das Förderband 2, dessen Abwurfkante sich bei Beginn der Bildung einer Reihe am linken Ende der Ablegefläche 18 befindet, wie das in der Fig. 1 dargestellt ist. Wenn nun ein erster Folienbeutel in den Bereich der Lichtschranke 19 gelangt, so wird dadurch einerseits der Motor 3 ausgeschaltet oder die Antriebstrommel 5 vom Getriebe 4 losgekuppelt und das Band 2 angehalten, und andererseits der Motor 15 eingeschaltet, der den Schlitten 23 mit der Abwurfkante 9 nach rechts verschiebt und zwar um eine Strecke, die dem für den Beutel 21 nötigen Platz plus der Distanz zum nächsten Beutel entspricht. Durch dieses Verschieben wird der an der Abwurfkante liegende Beutel 21 ohne irgend einen Staudruck vom Band 2 auf die Ablegefläche 18 abgelegt. Sobald der Ablegevorgang beendigt ist und sich der Schlitten nicht mehr weiter verschiebt, wird die Bewegung des Transportbandes 2 wieder eingeschaltet, sodass der nächste Folienbeutel zur Lichtschranke 19 gelangen kann, wodurch sich der vorstehend beschriebene Vorgang wiederholt, bis sich der Schlitten 23 so weit verschoben hat, dass er die in der Fig. 2 dargestellte Endstellung erreicht hat, also die Stellung, in welcher sich die Abwurfkante 9 des Bandes 2 am rechten Ende der Ablegefläche 18 befindet. In dieser Lage bewirkt ein Endschalter des Endschalterpaares 24, dass der Motor 15 den Schlitten in die in der Fig. 1 dargestellte Ausgangslage zurückschiebt und zwar mit einer Geschwindigkeit, die mindestens der Laufgeschwindigkeit des Bandes 2 entspricht, damit die auf dem Band befindlichen Beutel während dieses Verschiebevorganges nicht näher zur Abwurfkante 9 gelangen, also den Abstand von dieser Kante 9 mindestens beibehalten. Während der Dauer dieser Schlittenverschiebung können die auf der Ablagefläche 18 bereitgestellten Produkte gemeinsam weiter transportiert werden, also beispielsweise so, wie das in der Fig. 3 rein schematisch dargestellt ist, wo sie gemeinsam durch eine Stoss-Stange quer zur Förderbandbewegung in einen Speicher gestossen werden.

**Patentansprüche**

1. Vorrichtung um in unregelmässiger Folge eintreffende, gleichartige Gegenstände (21) auf einer Ablegefläche (18) so abzulegen, dass sie dort eine konstante Distanz voneinander aufweisen, dadurch gekennzeichnet, dass sie ein teleskopartig verlängerbares Förderband (2) mit einer über der Ablagefläche (18) von deren einem Ende zu deren anderem Ende verschiebbaren Abwurfkante (9) aufweist, an welcher eine durch die ankommenden Gegenstände (21) schaltbare Lichtschranke (19) angeordnet ist, die bei jedem ankommenden Gegenstand ein Anhalten des Förderbandes (2) sowie ein Verschieben der Abwurfkante (9) in der Richtung entgegen der Förderbandlaufrichtung um eine Strecke bewirkt, die der Länge eines Gegenstandes plus der konstanten Distanz zum nächsten Gegenstand entspricht, und dass ein Endschalter (24) vorhanden ist, der dann, wenn die Abwurfkante (9) nach der stufenweisen Verkürzung des Förderbandes das zweite Ende der Ablagefläche (18) erreicht hat, die Abwurfkante (9) mit der Förderbandgeschwindigkeit zum ersten Ende der Ablagefläche (18) verschiebt.

2. Vorrichtung nach Anspruch 1, dadurch gekennzeichnet, dass die Ablagefläche (18) horizontal, aber quer zur Laufrichtung des Förderbandes (2) verschiebbar ist.

3. Vorrichtung nach Anspruch 2, gekennzeichnet durch einen Verschiebemechanismus und eine zu seiner Steuerung dienende Steuerschaltung, die die Ablagefläche (18) dann verschiebt, wenn die Abwurfkante sich in der Laufrichtung des Förderbandes verschiebt.

4. Vorrichtung nach Anspruch 1, dadurch gekennzeichnet, dass die Ablagefläche (18) unverschiebbar ausgebildet und mit einer Schiebevorrichtung versehen ist, um alle in der Reihe abgelegten Gegenstände gemeinsam horizontal, aber quer zur Laufrichtung des Förderbandes zu verschieben.

Fig.1

Fig.2

Fig.3

Europäisches
Patentamt

**EUROPÄISCHER RECHERCHENBERICHT**

Nummer der Anmeldung

| EINSCHLÄGIGE DOKUMENTE | EP 91810393.8 |
|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A - 2 427 156</u><br>(CRISPLANT)<br>* Fig. 1 * | 1 | B 65 G 47/29 |
| A | <u>DE - A1 - 2 838 113</u><br>(BROEDRENE)<br>* Fig. 1 * | 1 | |
| A | <u>CH - A5 - 657 829</u><br>(SIG)<br>* Fig. 1 * | 1 | |
| A | <u>US - A - 4 469 219</u><br>(COSSE)<br>* Fig. 1 * | 1 | |
| A | <u>US - A - 4 290 517</u><br>(HAFFERKAMP)<br>* Fig. 1 * | 2,4 | |

| | RECHERCHIERTE SACHGEBIETE (Int. Cl.⁵) |
|---|---|
| | B 65 G |

Der vorliegende Recherchenbericht wurde für alle Patentansprüche erstellt.

| Recherchenort | Abschlußdatum der Recherche | Prüfer |
|---|---|---|
| WIEN | 08-08-1991 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82